# EUROPÄISCHE PATENTSCHRIFT

(11) **EP 2 627 435 B1**
(45) Veröffentlichungstag und Bekanntmachung des Hinweises auf die Patenterteilung: **14.12.2016**
(21) Anmeldenummer: 11832207.2
(22) Anmeldetag: 10.10.2011
(51) Int. Cl.: B01D 53/94, B01J 29/06, B01J 29/072, B01J 29/46, B01J 29/76

(54) **VERWENDUNG VON PHOSPHOR UND/ODER SCHWEFEL SOWIE WENINGSTENS EIN ÜBERGANGSMETALL ENTHALTENDEN ZEOLITHEN ZUR N2O-ZERSETZUNG**
USE OF ZEOLITES COMPRISING PHOSPHORUS AND/OR SULFUR AND AT LEAST ONE TRANSITION METAL FOR DECOMPOSITION OF N2O
USAGE DE ZÉOLITHES COMPRENANT DU PHOSPHORE ET/OU DU SOUFRE ET AU MOINS UN MÉTAL DE TRANSITION POUR LA DÉCOMPOSITION DE N2O

(30) Priorität: 12.10.2010 EP 10187258
(43) Veröffentlichungstag der Anmeldung: 21.08.2013
(73) Patentinhaber: BASF SE, 67056 Ludwigshafen am Rhein (DE)
(72) Erfinder: DEUERLEIN, Stephan, 67061 Ludwigshafen (DE); ROSENDAHL, Tobias, 68259 Mannheim (DE)
(86) Internationale Anmeldenummer: PCT/IB2011/054458
(87) Internationale Veröffentlichungsnummer: WO 2012/049611

(56) Entgegenhaltungen:
- EP-A1- 0 603 900
- EP-A2- 0 585 025
- CN-A- 101 528 326
- CN-A- 101 730 575
- KR-A- 20090 040 080
- US-A- 4 867 954
- US-A1- 2009 196 813

## Beschreibung

Die vorliegende Erfindung betrifft die Verwendung eines Zeolith-Katalysators enthaltend wenigstens ein Übergangsmetall, wobei er zusätzlich Schwefel- und/oder Phosphoratome enthält, zur Minderung des Gehaltes an Stickstoffoxiden in einem Gas, sowie ein Verfahren zur Minderung des Gehaltes an Stickstoffoxiden in einem Gas durch Inkontaktbringen dieses Gases mit einem solchen Zeolith-Katalysator.

Die Verwendung von mit Metallen dotierten Katalysatoren in Verfahren zum katalytischen Abbau von Stickstoffoxiden ist aus dem Stand der Technik bereits bekannt.

DE 101 12 396 A1 offenbart ein Verfahren zur Verringerung des Gehaltes an N₂O in Gasen. Dabei wird ein ausgewählter Zeolith-Katalysator eingesetzt. Dieser liegt als H-Form vor und/oder enthält ausgetauschtes Eisen und ist gekennzeichnet durch die Anwesenheit von Nichtgitter-Aluminium neben dem Gitter-Aluminium in einem molaren Verhältnis von 1 : 2 bis 20 : 1. Des Weiteren wird in diesem Dokument offenbart, dass eine Dealuminierung, bzw. Demetallierung durch eine Mineralsäurebehandlung durchgeführt werden kann. Dazu werden Säuren ausgewählt aus HCl, HF, H₂SO₄, HNO₃ und H₃PO₄ verwendet. Die Säurebehandlung gemäß DE 101 12 396 A1 wird nicht dazu durchgeführt, Schwefel- und/oder Phosphoratome auf den Katalysator auf zu bringen. In diesem Dokument wird kein Gehalt an Schwefel- und/oder Phosphoratomen im fertigen Katalysator offenbart.

WO 03/084646 A1 offenbart ein Verfahren zur Minderung des Gehaltes von NOₓ und N₂O in Gasen, insbesondere in Prozessgasen und Abgasen, umfassend die Zugabe mindestens eines Stickstoff-enthaltenden Reduktionsmittels zu dem NOₓ und N₂O enthaltenden Gas in einer solchen Menge, wie mindestens zur vollständigen Reduktion des NOₓ benötigt wird, Zugabe eines Kohlenwasserstoffes, Kohlenmonoxid, Wasserstoff oder von einem Gemisch einer oder mehrerer dieser Gase zu dem NOₓ und N₂O enthaltenden Gas für die Reduktion des N₂O und Leiten des Gasgemisches in mindestens eine Reaktionszone mit Temperaturen von bis zu 450 °C, die eine oder mehrere mit Eisen beladene Zeolithe enthält. Gemäß diesem Verfahren werden Katalysatoren verwendet, die auf Zeolithen basieren, in die durch einen Festkörper-Ionentausch Eisen eingebracht wurde. Dazu werden üblicherweise kommerziell erhältliche Ammonium-Zeolithe mit entsprechenden Eisensalzen, z. B. FeSO₄ · 7 H₂O behandelt. Nach Kalzinieren werden die eisenhaltigen Zeolithe in destilliertem Wasser intensiv gewaschen und nach Abfiltrieren des Zeolithen getrocknet. Somit offenbart das genannte Dokument Zeolith-Katalysatoren, die mit Eisen dotiert sind. Die durch das Aufbringen der Eisen-Kationen ebenfalls aufgebrachten Sulfat-Anionen werden jedoch durch das intensive Waschen wieder entfernt, so dass kein Schwefel auf dem eisendotierten Katalysator vorliegt.

DE 102 15 605 A1 offenbart ebenfalls ein Verfahren zur Minderung des Gehaltes von NOₓ und N₂O in Gasen, insbesondere in Prozessgasen und Abgasen, wobei das zu behandelnde Gas mit einem Katalysator in Kontakt gebracht wird, der auf einem Zeolith basiert und mit Eisen dotiert ist. Gemäß diesem Dokument kann das Dotieren mit Eisen ebenfalls dadurch geschehen, dass FeSO₄ · 7 H₂O auf den Zeolithen aufgebracht wird. Allerdings werden die Sulfat-Anionen auch hier durch intensives Waschen wieder entfernt, so dass in dem endgültigen Katalysator keine Schwefel- und/oder Phosphoratome vorliegen.

DE 10 2005 022 650 A1 offenbart auch ein Verfahren zur Verringerung des Gehaltes an Stickoxiden in Gasen. Dazu wird das zu behandelnde Gas mit einem Zeolithen in Kontakt gebracht, der mit Kupfer- und/oder Eisenatomen dotiert ist. Das Vorhandensein von Schwefel- oder Phosphoratomen auf dem Zeolith-Katalysator wird in diesem Dokument ebenfalls nicht offenbart.

Das Dokument EP 0 603 900 A1 beschreibt die Entfernung von Stickoxiden aus Abgas mit einem Zeolithen mit Phosphoratomen und Cu als Übergangsmetall.

Die aus dem Stand der Technik bekannten Katalysatoren, insbesondere die mit Eisen dotierten Zeolithe, weisen für den Abbau von Stickstoffoxiden in Gasen eine Aktivität auf, die noch verbesserungswürdig ist. Des Weiteren besteht ein Bedarf an einem verbesserten Zeolith-Katalysator, der bereits bei niedrigen Temperaturen die gleiche Aktivität wie die aus dem Stand der Technik bekannten Systeme aufweist, bzw. bei gleicher Temperatur eine entsprechend höhere Aktivität zeigt. Ein Katalysator, der schon bei einer niedrigeren Reaktionstemperatur eine genügend hohe Aktivität zeigt, wäre dahingehend von Vorteil, da das Abgas aus vielen großindustriellen Anlagen eine niedrige Temperatur aufweist, und das Aufheizen dieses Abgases vor Umsetzung an dem entsprechenden Katalysator aus ökologischen und ökonomischen Gründen nicht attraktiv ist.

Die gegenüber dem vorliegenden Stand der Technik genannten Aufgaben werden erfindungsgemäß gelöst durch die Verwendung eines Zeolith-Katalysator zur Minderung des Gehaltes an Stickstoffoxiden in einem Gas, wobei der Zeolith-Katalysator wenigstens ein Übergangsmetall und zusätzlich Schwefel- und/oder Phosphoratome enthält.

Die Aufgaben werden des Weiteren gelöst durch eine Verwendung und ein Verfahren zur Minderung des Gehaltes an Stickstoffoxiden in einem Gas durch Inkontaktbringen des Gases mit einem Zeolith-Katalysator nach den Ansprüchen 1-9.

Der erfindungsgemäß verwendete Zeolith-Katalysator wird im Folgenden detailliert erläutert:
Basis des erfindungsgemäß verwendeten Zeolith-Katalysators ist ein Zeolith. Zeolithe sind dem Fachmann an sich bekannt und werden beispielsweise offenbart in Catalysis and Zeolites, Fundamentals and Applications, J. Weitkamp, I. Puppe, (eds), Springer-Verlag, Berlin, Heidelberg 1990*.*

Erfindungsgemäß geeignete Zeolithe sind ausgewählt aus der Gruppe bestehend aus BEA, FAU, FER und MFI und Mischungen davon.

Erfindungsgemäß enthält der Zeolith-Katalysator wenigstens ein Übergangsmetall, ausgewählt aus der Gruppe bestehend aus Sc, Ti, V, Cr, Mn, Fe, Co, Ni, Zn, Ru, Rh, Pd, Ag, Os, Ir, Pt, Au und Mischungen davon.

In einer besonders bevorzugten Ausführungsform enthält der erfindungsgemäß verwendete Katalysator als wenigstens ein Übergangsmetall Fe, Cu, Co und/oder Ni, ganz besonders bevorzugt Fe.

Daher betrifft die vorliegende Erfindung ganz besonders bevorzugt die erfindungsgemäße Verwendung, wobei das wenigstens eine Übergangsmetall Fe, Cu, Co und/oder Ni ist.

Erfindungsgemäße Beispiele für Stickstoffoxide sind bevorzugt ausgewählt aus der Gruppe bestehend aus Distickstoffmonoxid N₂O, Stickoxiden NOₓ, wobei x 1 oder 2 bedeutet und Mischungen davon. In einer bevorzugten Ausführungsform enthält das zu behandelnde Gas wenig (NOₓ/N₂O < 0,5) und insbesondere keine Stickoxide NOₓ. Daher wird in einer bevorzugten Ausführungsform der erfindungsgemäßen Verwendung eine Stufe zu NOₓ-Abreicherung vorgeschaltet. Verfahren zur NOₓ-Abreicherung sind dem Fachmann bekannt.

Besonders bevorzugt wird durch die erfindungsgemäße Verwendung der Gehalt des Stickstoffoxids N₂O vermindert.

Das wenigstens eine erfindungsgemäß vorliegende Übergangsmetall kann in dem erfindungsgemäß verwendeten Zeolith-Katalysator im Allgemeinen in jeder Menge enthalten sein, die dem erfindungsgemäß verwendeten Katalysator eine besonders hohe Aktivität, beispielsweise beim Abbau von Stickstoffoxiden, insbesondere Distickstoffmonoxid N₂O, verleiht.

In einer bevorzugten Ausführungsform liegt in dem erfindungsgemäß verwendeten Katalysator das wenigstens eine Übergangsmetall in einer Konzentration von 0,1 bis 10,0 Gew.-%, besonders bevorzugt 0,25 bis 5,0 Gew.-%, ganz besonders bevorzugt 0,5 bis 2,5 Gew.-%, beispielsweise 0,7 oder 2,5 Gew.-%, jeweils bezogen auf den gesamten Zeolith-Katalysator, vor.

In einer bevorzugten Ausführungsform betrifft die vorliegende Erfindung daher die erfindungsgemäße Verwendung, wobei das wenigstens eine Übergangsmetall in einer Konzentration von 0,1 bis 10,0 Gew.-%, besonders bevorzugt 0,25 bis 5,0 Gew.-%, ganz besonders bevorzugt 0,5 bis 2,5 Gew.-%, beispielsweise 0,7 oder 2,5 Gew.-%, jeweils bezogen auf den gesamten Zeolith-Katalysator, vorliegt.

Das erfindungsgemäß vorliegende wenigstens eine Übergangsmetall kann in dem erfindungsgemäß verwendeten Zeolith-Katalysator entweder in kationischer oder in elementarer Form vorliegen. Liegt das Übergangsmetall in kationischer Form vor, so bevorzugt in Oxidationszahlen, die für das entsprechende Übergangsmetall aufgrund seiner Stellung im Periodensystem typisch sind. In dem bevorzugten Fall, dass Eisen als Übergangsmetall in dem erfindungsgemäß verwendeten Zeolith-Katalysator vorliegt, ist dessen Oxidationszahl bevorzugt +2 oder +3. Liegt das wenigstens eine Übergangsmetall in elementarer Form vor, so weist es die Oxidationszahl 0 auf. Das wenigstens eine Übergangsmetall kann auch als Mischung in verschiedenen Oxidationszahlen vorliegen.

Es ist erfindungsgemäß möglich, dass das wenigstens eine vorliegende Übergangsmetall in das Gitter des entsprechenden Zeolithen eingebaut wird und/oder außerhalb dieser Gitterstruktur, als so genanntes Nichtgitter-Übergangsmetall, vorliegt.

Der erfindungsgemäß verwendete Zeolith-Katalysator zeichnet sich des Weiteren dadurch aus, dass er zusätzlich Schwefel- und/oder Phosphoratome enthält.

In dem erfindungsgemäß verwendeten Zeolith-Katalysator können die Schwefel- und/oder Phosphoratome im Allgemeinen in jeder Menge vorliegen, die dem erfindungsgemäß verwendeten Zeolith-Katalysator, in Kombination mit dem vorliegenden wenigstens einen Übergangsmetall, eine besonders hohe Aktivität beim Abbau von Stickstoffoxiden, insbesondere Distickstoffmonoxid N₂O, verleiht.

In einer bevorzugten Ausführungsform liegen in dem erfindungsgemäß verwendeten Katalysator Schwefel- und/oder Phosphoratome in einer Konzentration von weniger als 10 Gew.-%, bezogen auf den gesamten Katalysator, vor.

In einer weiter bevorzugten Ausführungsform liegen in dem erfindungsgemäßen Katalysator Schwefel- und/oder Phosphoratome in einer Konzentration von weniger als 3 Gew.-%, ganz besonders bevorzugt 0,2 bis 2,5 Gew.-%, jeweils bezogen auf den gesamten Katalysator vor.

Die vorliegende Erfindung betrifft daher bevorzugt auch die erfindungsgemäße Verwendung, wobei die Schwefel- und/oder Phosphoratome in einer Konzentration von weniger als 10 Gew.-%, bevorzugt weniger als 3 Gew.-%, besonders bevorzugt 0,2 bis 2,0 Gew.-%, bezogen auf den gesamten Katalysator, vorliegen.

Die erfindungsgemäß vorliegenden Schwefel und/oder Phosphoratome können in dem erfindungsgemäß verwendeten Zeolith-Katalysator in einer einheitlichen Oxidationsstufe oder in Kombinationen verschiedener Oxidationsstufen vorliegen. In der erfindungsgemäßen Ausführungsform, bei der Schwefel in dem erfindungsgemäßen Zeolith-Katalysator vorliegt, hat dieser bevorzugt die Oxidationsstufe +6 oder +2 oder eine Kombination dieser nebeneinander, insbesondere aber die Oxidationsstufe +6.

In der erfindungsgemäßen Ausführungsform, bei der Phosphor in dem erfindungsgemäßen Zeolith-Katalysator vorliegt, hat dieser bevorzugt die Oxidationsstufe +5 oder +3, oder eine Kombination dieser nebeneinander, insbesondere aber die Oxidationsstufe +5.

Schwefel und/oder Phosphor können zum einen in das Gitter des entsprechenden Zeolithen eingebaut sein, oder Schwefel und/oder Phosphor liegen als Atome, Kationen oder Anionen neben dem Gitter des Zeolithen vor, oder Schwefel und/oder Phosphor liegen sowohl im Gitter als auch neben Gitter des entsprechenden Zeolithen vor.

Die erfindungsgemäß verwendeten Zeolith-Katalysatoren enthalten im Allgemeinen Aluminium in kationischer Form, welches im Gitter vorliegt. Der erfindungsgemäß verwendete Zeolith-Katalysator kann in einer weiteren Ausführungsform neben den im Gitter vorhandenen Aluminium-Kationen auch entsprechende Kationen enthalten, die neben dem Gitter, als so genannte Nichtgitter-Alumniumkationen vorliegen.

Besonders geeignet zur Einstellung eines erfindungsgemäß bevorzugten Verhältnisses von Nicht-Gitter- zu Gitteraluminium ist das so genannte Steamen der Zeolithe, d. h. eine hydrothermale Behandlung der Zeolithe durch Überleiten von Wasserdampf bei erhöhten Temperaturen oder auch eine Behandlung mit Säuren. Auch eine Kombination verschiedener Methoden ist anwendbar.

Bei einer Behandlung mit H₂O-Dampf und/oder Säure findet, wie dem Fachmann bekannt ist, eine Dealuminierung bzw. falls der Zeolith neben Al noch andere Metalle wie z. B. Fe, Ga etc. enthält, eine Demetallierung statt, d. h. ein Austreiben des Aluminiums bzw. dieser Metalle aus dem Gittergerüst des Zeolithen. Das Aluminium bzw. die Metalle wandern dabei von ihren Gitterpositionen in die Poren des Zeolithen und verbleiben dort als amorphe Bestandteile in oxidischer oder hydroxidischer Form als so genanntes Extragittermetall. Der Grad der Dealuminierung bzw. Demetallierung kann über die Dauer der Behandlung und die Reagenzkonzentration eingestellt werden. Bei der Behandlung kann auch ein Teil des erzeugten Extragittermetalls aus den Poren entfernt werden. Dadurch kann sich der Metallgehalt bezüglich des Katalysators verändern.

Die Behandlung des Zeolithen mit Wasserdampf kann bspw. bei Temperaturen von 300 bis 800 °C und über einen Zeitraum von 0,5 bis 48 h erfolgen. Der Zeolith kann mit reinem Wasserdampf oder einem Gemisch aus Stickstoff und/oder Luft und Wasserdampf mit einem Wasserdampfanteil von 1 bis 100 Gew.-% bei Gesamtdrücken bis zu 100 bar ausgesetzt werden. Gegebenenfalls kann dem Wasserdampf bzw. dem Wasserdampfgemisch ein Trägergas zugesetzt werden. Geeignete Trägergase sind unter den Behandlungsbedingungen inert, Beispiele dafür sind N₂, Ar, He, H₂ oder ein Gemisch davon.

Die Zeolithe können durch eine zusätzliche Mineralsäurebehandlung, gegebenenfalls zusätzlich zur Wasserdampfbehandlung, weiter dealuminiert/demetalliert werden. Die Säurebehandlung kann sowohl Extragittermetall aus den Poren entfernen als auch zu einer weiteren Demetallierung des Gitters führen. Dieser Schritt kann z. B. in einem Batchreaktor bei Temperaturen von 0 bis 120 °C bei einem Säure/Zeolith-Verhältnis von 1 bis 100 cm³/g und bei Säurekonzentrationen von 0,001 M bis zur maximalen Konzentration der Säure durchgeführt werden. Beispiele für Säuren, die für diesen Schritt eingesetzt werden können, sind HCl, HF, H₂SO₄, HNO₃ und H₃PO₄. Nach der Säurebehandlung wird der Zeolith durch übliche Verfahren, z. B. durch Filtration oder Zentrifugieren, vom Reaktionsgemisch abgetrennt.

Gemäß der vorliegenden Erfindung werden durch die vorstehend beschriebene Behandlung des Zeolithen amorphe Metalloxide bzw. -hydroxide an Extragitterstellen erzeugt, von denen angenommen wird, dass sie als katalytische Zentren die Aktivität zum Abbau von N₂O steigern.

Der erfindungsgemäß verwendete Zeolith-Katalysator kann neben dem beschriebenen Zeolithen, dem wenigstens einen Übergangsmetall und Schwefel- und/oder Phosphoratomen weitere übliche, dem Fachmann bekannte Komponenten enthalten, beispielsweise Bindemittel wie z. B. Aluminiumoxid oder Siliziumoxid und Mischungen davon.

Der erfindungsgemäß verwendete Zeolith-Katalysator kann in jedweder dem Fachmann als geeignet erscheinenden Form eingesetzt werden, beispielsweise als Formkörper, z. B. Stränge oder Wabenkörper, Splitt, Partikel oder Pulver. Technisch wird der erfindungsgemäß verwendete Zeolith-Katalysator bevorzugt in Form von Formkörpern eingesetzt, beispielsweise mit einem Partikeldurchmesser von 1 bis 10 mm bevorzugt 1,5 bis 5 mm.

Der erfindungsgemäß verwendete Katalysator kann beispielsweise durch ein Verfahren gemäß den folgenden Schritten hergestellt werden:
(A) Aufbringen des wenigstens einen Übergangsmetalls oder einer Vorläuferverbindung davon auf einen Zeolithen,
(B) Kalzinieren des Zeolithen aus Schritt (A), um gegebenenfalls die Vorläuferverbindung in das wenigstens eine Übergangsmetall zu überführen, und um einen das wenigstens eine Übergangsmetall enthaltenden Zeolithen zu erhalten,
(C) Aufbringen der Schwefel- und/oder Phosphoratome oder einer Vorläuferverbindung davon auf den dotierten Zeolithen aus Schritt (B) und
(D) Kalzinieren des Zeolithen aus Schritt (C), um den erfindungsgemäß zu verwendenden Katalysator zu erhalten.

Die einzelnen Schritte des Verfahrens zur Herstellung des erfindungsgemäß verwendeten Katalysators werden im Folgenden detailliert erläutert:

### Schritt (A):

Schritt (A) umfasst das Aufbringen des wenigstens einen Übergangsmetalls oder einer Vorläuferverbindung davon auf einen Zeolithen.

Erfindungsgemäß werden Zeolithe, ausgewählt aus der Gruppe bestehend aus BEA, FAU, FER, MFI und Mischungen davon, verwendet.

In einer bevorzugten Ausführungsform werden dazu Vorläuferverbindungen der genannten Übergangsmetalle, besonders bevorzugt der Metalle Fe, Co, Ni oder Mischungen davon verwendet.

Besonders bevorzugte Vorläuferverbindungen für das ganz besonders bevorzugt eingesetzte Übergangsmetall Eisen sind Fe(NO₃)₂ und Fe(SO₄).

Besonders bevorzugt wird Schritt (A) des Verfahrens dadurch durchgeführt, dass die entsprechenden Vorläuferverbindungen in einer geeigneten Menge in Wasser oder einer wässrigen Lösung gelöst werden und mit dieser wässrigen Lösung die entsprechenden Zeolithe getränkt werden. Die bevorzugt eingesetzten wässrigen Lösungen können in einer Ausführungsform Wasser als Lösungsmittel enthalten. In einer weiteren Ausführungsform können die wässrigen Lösungen neben Wasser auch weitere, polare und mit Wasser mischbare Lösungsmittel enthalten, beispielsweise Alkohole, wie Methanol, Ethanol, Propanole, und Mischungen davon.

Das Tränken eines Feststoffes mit einer wässrigen Lösung ist dem Fachmann an sich bekannt. Bevorzugt wird das Tränken durchgeführt, indem die Tränklösung des entsprechenden Übergangsmetalls, bzw. einer Vorläuferverbindung davon, auf den Zeolith aufgesprüht wird.

Die Menge an wässriger Tränklösung, bzw. die Menge an in dieser Tränklösung vorhandenem Übergangsmetall bzw. Vorläuferverbindung des wenigstens einen Übergangsmetalls wird dabei so eingestellt, dass nach Aufbringen auf den Zeolithen und Trocknung, bzw. Kalzinierung einer entsprechende Menge an Übergangsmetall auf dem Zeolith vorliegt. Verfahren, die entsprechenden Mengen zu bestimmen, sind dem Fachmann bekannt.

In einer Ausführungsform des Verfahrens wird nach dem Aufbringen des wenigstens einen Metalls gemäß Schritt (A) des Verfahrens das auf dem Zeolith vorhandene Wasser entfernt, beispielsweise durch eine Trocknung. Verfahren zum Trocknen eines Feststoffes sind dem Fachmann an sich bekannt, beispielsweise Filtrieren, Zentrifugieren und/oder Erhitzen. In einer bevorzugten Ausführungsform erfolgt das Trocknen des Zeolithen nach Verfahrensschritt (A) durch Behandeln durch Erhitzen bei einer Temperatur zwischen beispielsweise 10 und 150 °C und einem Druck von beispielsweise Atmosphärendruck oder einem verminderten Druck von beispielsweise unterhalb 800 mbar. Der so bevorzugt getrocknete, Übergangsmetall-enthaltende Zeolith wird bevorzugt direkt in Schritt (B) überführt.

### Schritt (B):

Schritt (B) umfasst das Kalzinieren des Zeolithen aus Schritt (A), um gegebenenfalls die Vorläuferverbindung in das wenigstens eine Übergangsmetall zu überführen, und um einen das wenigstens eine Übergangsmetall enthaltenden Zeolithen zu erhalten.

Das Kalzinieren eines Feststoffes ist dem Fachmann an sich bekannt. Bevorzugt wird der in Schritt (A) mit Metall-Kationen dotierte Zeolith bei einer Kalzinierungstemperatur von 300 bis 700 °C, bevorzugt 400 bis 600 °C, besonders bevorzugt 450 bis 580 °C kalziniert. Das Kalzinieren kann im Allgemeinen in jeder geeigneten Atmosphäre erfolgen. Bevorzugt wird eine inerte Atmosphäre, beispielsweise eine Stickstoffatmosphäre, verwendet.

Die Kalzinierung wird solange durchgeführt bis ein entsprechend dotierter Zeolith-Katalysator erhalten wird. Beispielsweise wird für 1 bis 10 Stunden, bevorzugt 3 bis 6 Stunden, kalziniert.

In Schritt (B) des Verfahrens wird zunächst das ggf. noch vorhandene Wasser aus dem Tränkschritt (A) und/oder ggf. vorhandenes Kristallwasser und/oder ggf. vorhandene organische Lösungsmittel entfernt. Des Weiteren wird die bevorzugte verwendete Vorläuferverbindung des wenigstens einen Übergangsmetalls in das entsprechende Übergangsmetall und/oder Übergangsmetalloxid überführt und/oder das wenigstens eine Übergangsmetall wird zumindest teilweise in die Gitterstruktur des Zeolithen eingebaut.

### Schritt (C):

Schritt (C) umfasst das Aufbringen der Schwefel- und/oder Phosphoratome oder einer Vorläuferverbindung davon auf den dotierten Zeolithen aus Schritt (B).

Bevorzugt wird in Schritt (C) des Verfahrens wenigstens eine Vorläuferverbindung der Schwefel- und/oder Phosphoratome aufgebracht. Beispiele für entsprechende Vorläuferverbindungen sind ausgewählt aus der Gruppe bestehend aus schwefliger Säure H₂SO₃, Schwefelsäure H₂SO₄, Phosphinsäure H₃PO₂, Phosphonsäure H₃PO₃, Phosphorsäure H₃PO₄ und Mischungen davon. Bevorzugt werden Schwefelsäure und/oder Phosphorsäure eingesetzt.

In einer bevorzugten Ausführungsform wird der in Schritt (B) erhaltene dotierte Zeolith mit einer wässrigen Lösung der entsprechenden Vorläuferverbindung getränkt. Wie schon bezüglich Schritt (A) ausgeführt, kann eine wässrige Lösung enthaltend Wasser verwendet werden. In Schritt (C) kann auch eine wässrige Lösung verwendet werden, die zusätzlich neben Wasser ein polares, wasserlösliches Lösungsmittel enthält, beispielsweise Alkohole wie Methanol, Ethanol, Propanole oder Mischungen davon. Bevorzugt wird in Schritt (C) eine wässrige Lösung enthaltend Wasser als Lösungsmittel eingesetzt. Ganz besonders wird in Schritt (C) eine wässrige Lösung von Phosphorsäure oder eine wässrige Lösung von Schwefelsäure oder eine Mischung dieser beiden wässrigen Lösungen verwendet.

Das Tränken an sich kann nach dem Fachmann bekannten Verfahren erfolgen, beispielsweise durch Inkontaktbringen des Zeolithen aus Schritt (B) mit den genannten wässrigen Lösungen in einem Rührreaktor oder Aufsprühen der Lösungen auf den Zeolithen.

Nach dem Tränken kann der getränkte Zeolith nach allen dem Fachmann bekannten Verfahren getrocknet werden. Entsprechende Verfahren sind bezüglich Schritt (A) genannt und gelten entsprechend auch für Schritt (C).

Das Verfahren zeichnet sich bevorzugt dadurch aus, dass während oder nach Schritt (C) keine Waschung des Zeolith-Katalysators erfolgt, da ansonsten Schwefel- und/oder Phosphoratome wieder entfernt würden, was erfindungsgemäß nicht gewünscht ist.

### Schritt (D):

Schritt (D) des Verfahrens umfasst das (D) Kalzinieren des Zeolithen aus Schritt (C), um den erfindungsgemäß zu verwendenden Katalysator zu erhalten.

Das Kalzinieren eines Feststoffes ist dem Fachmann an sich bekannt. Bevorzugt wird der in Schritt (D) mit Übergangsmetall-Kationen und Schwefel- und/oder Phosphoratomen dotierte Zeolith bei einer Kalzinierungstemperatur von 300 bis 700 °C, bevorzugt 400 bis 600 °C, besonders bevorzugt 450 bis 580 °C kalziniert. Das Kalzinieren kann im Allgemeinen in jeder geeigneten Atmosphäre erfolgen. Bevorzugt wird eine inerte Atmosphäre, beispielsweise eine Stickstoffatmosphäre, verwendet.

Die Kalzinierung wird solange durchgeführt bis ein entsprechend dotierter Zeolith-Katalysator erhalten wird. Es wird beispielsweise für 1 bis 10 Stunden, bevorzugt 3 bis 6 Stunden, kalziniert.

In Schritt (D) des Verfahrens wird zunächst das ggf. noch vorhandene Wasser aus dem Tränkschritt (C) und/oder ggf. vorhandene organische Lösungsmittel entfernt. Des Weiteren wird die bevorzugte verwendete Vorläuferverbindung der Schwefel- und/oder Phosphoratome in die Schwefel- und/oder Phosphoratome bzw. deren Oxide überführt und/oder die Schwefel- und/oder Phosphoratome werden zumindest teilweise in die Gitterstruktur des Zeolithen eingebaut und/oder gehen mit dem wenigstens einen Übergangsmetall aus Schritt (A) eine Verbindung ein.

Optional können die Schritte (A) und (C) auch zusammengefasst werden. Dies kann z. B. geschehen, indem ohne Zwischenkalzinierung und Zwischentrocknung die beschriebene Übergangsmetalllösung und die beschriebene Schwefel- und/oder Phosphoratome enthaltende Lösung nacheinander oder gleichzeitig aufgebracht werden. Alternativ können auch die Schritte (A) und (C) direkt nacheinander ohne den Zwischenschritt (B) durchgeführt werden.

Eine optional mögliche Dealuminierung bzw. Demetallierung des erfindungsgemäß zu verwendenden Zeolith-Katalysators kann an jeder Stelle des beispielhaft genannten Herstellungsverfahrens erfolgen, insbesondere vor Schritt (A) und/oder vor Schritt (C) und/oder nach Schritt (D). Im Prinzip ist die Dealuminierung bzw. Demetallierung eines Zeolithen dem Fachmann bekannt.

Beispielsweise kann die Dealuminierung bzw. Demetallierung durch eine Behandlung mit H₂O-Dampf erfolgen. Der Grad der Dealuminierung bzw. Demetallierung kann über die Dauer der Wasserdampfbehandlung eingestellt werden. Die Behandlung des Zeolithen mit Wasserdampf kann bspw. bei Temperaturen von 300 bis 800 °C und über einen Zeitraum von 0,5 bis 48 h erfolgen. Der Zeolith kann mit reinem Wasserdampf oder einem Gemisch aus Stickstoff und/oder Luft und Wasserdampf mit einem Wasserdampfanteil von 1 bis 100 Gew.-% bei Gesamtdrücken bis zu 100 bar ausgesetzt werden. Gegebenenfalls kann dem Wasserdampf bzw. dem Wasserdampfgemisch ein Trägergas zugesetzt werden. Geeignete Trägergase sind unter den Behandlungsbedingungen inert, Beispiele dafür sind N₂, Ar, He, H₂ oder ein Gemisch davon.

Die Zeolithe können, gegebenenfalls auch zusätzlich zur Wasserdampfbehandlung, durch eine Mineralsäurebehandlung dealuminiert/demetalliert werden. Die Säurebehandlung kann sowohl Extragittermetall aus den Poren entfernen als auch zu einer weiteren, Demetallierung des Gitters führen. Dieser Schritt kann z. B. in einem Batchreaktor bei Temperaturen von 0 bis 120 °C bei einem Säure/Zeolith-Verhältnis von 1 bis 100 cm³/g und bei Säurekonzentrationen von 0,001 M bis zur maximalen Konzentration der Säure durchgeführt werden. Beispiele für Säuren, die für diesen Schritt eingesetzt werden können, sind HCl, HF, H₂SO₄, HNO₃ und H₃PO₄. Nach der Säurebehandlung wird der Zeolith durch übliche Verfahren, z. B. durch Filtration oder Zentrifugieren, vom Reaktionsgemisch abgetrennt.

Nach erfolgter Herstellung des erfindungsgemäß zu verwendenden Zeolith-Katalysators kann dieser in eine geeignete Form überführt werden. Dies erfolgt im Allgemeinen nach dem Fachmann bekannten Verfahren, beispielsweise Pressen, Granulieren, Sieben, Splitten, Extrudieren, Verstrangen. Technisch wird der erfindungsgemäß verwendete Zeolith-Katalysator bevorzugt in Form von Formkörpern, z. B. Stränge oder Wabenkörper, eingesetzt, beispielsweise mit einem Partikeldurchmesser von 1 bis 10 mm, bevorzugt 1,5 bis 5 mm. Alternativ kann der Zeolith bei der Herstellung des erfindungsgemäß verwendeten Katalysators als Ausgangsmaterial in einer geeigneten Form eingesetzt werden.

Die erfindungsgemäße Verwendung kann im Allgemeinen bei allen Anwendungen erfolgen, bei denen der Gehalt an Stickoxiden in einem Gas gemindert werden soll. In einer bevorzugten Ausführungsform erfolgt die erfindungsgemäße Verwendung in der Salpetersäureproduktion, bei der Adipinsäureproduktion, bei Kraftwerksabgasen, bei Gasturbinen, oder bei Autokatalysatoren im Niedrigtemperaturbereich. In diesen Prozessen fallen Stickstoffoxid-haltige Prozess- und Abgase an, die mit Hilfe des hier aufgezeigten Verfahrens kostengünstig entstickt werden können.

Die vorliegende Erfindung betrifft daher bevorzugt die erfindungsgemäße Verwendung in der Salpetersäureproduktion, bei der Adipinsäureproduktion, bei Kraftwerksabgasen, bei Gasturbinen, oder bei Autokatalysatoren im Niedrigtemperaturbereich, besonders bevorzugt in der Salpetersäureproduktion.

Die vorliegende Erfindung betrifft auch ein Verfahren zur Minderung des Gehaltes an Stickstoffoxiden in einem Gas durch Inkontaktbringen des Gases mit einem Zeolith-Katalysator wie oben definiert.

Erfindungsgemäß zu behandelnde Gase enthalten in einer bevorzugten Ausführungsform Stickstoffoxide ausgewählt aus der Gruppe bestehend aus Distickstoffmonoxid N₂O, Stickoxide NOₓ, wobei x 1 oder 2 bedeutet und Mischungen davon. In einer bevorzugten Ausführungsform enthält das zu behandelnde Gas wenig (NOₓ/N₂O < 0,5) und insbesondere keine Stickoxide NOₓ. Daher wird in einer bevorzugten Ausführungsform dem erfindungsgemäßen Verfahren eine Stufe zu NOₓ-Abreicherung vorgeschaltet. Verfahren zur NOₓ-Abreicherung sind dem Fachmann bekannt.

Besonders bevorzugt wird durch das erfindungsgemäße Verfahren das Stickstoffoxid N₂O katalytisch abgebaut, so dass es insgesamt zu einer Verminderung des Gehaltes an diesem Gas in dem zu behandelnden Gas kommt.

Das erfindungsgemäß zu behandelnde Gas weist einen Gehalt an Distickstoffmonoxid N₂O von beispielsweise 10 Vol-ppm bis 20 Vol.-%, bevorzugt 200 Vol-ppm bis 10 Vol.-%, besonders bevorzug 500 bis 2000 Vol.-ppm auf.

Für die weiteren im zu behandelnden Gas vorliegenden Komponenten besteht keine Einschränkung. Gängige und damit bevorzugte weitere in dem erfindungsgemäß zu behandelnden Gas enthaltene Komponenten sind ausgewählt aus der Gruppe bestehend aus Wasser, Sauerstoff, NO, NO₂, NH₃ und N₂ und Mischungen davon.

Im Allgemeinen beträgt die Temperatur beim Inkontaktbringen des zu behandelnden Gases mit dem Zeolith-Katalysator in der Reaktionszone weniger als 500 °C, vorzugsweise weniger als 400 °C, ganz besonders bevorzugt 250 bis 400 °C.

Die vorliegende Erfindung betrifft daher bevorzugt das erfindungsgemäße Verfahren, wobei es bei einer Temperatur von weniger als 400 °C, ganz besonders bevorzugt 250 bis 400 °C, durchgeführt wird.

In einer weiteren Ausführungsform können verschiedene erfindungsgemäß zu verwendende Zeolith-Katalysatoren oder ein oder mehrere erfindungsgemäß zu verwendende Zeolith-Katalysatoren in Kombination mit weiteren dem Fachmann bekannten Katalysatoren, eingesetzt werden. Bei Verwendung mehrerer verschiedener Zeolith-Katalysatoren und gegebenenfalls anderen Katalysatoren können diese miteinander vermengt sein oder auch nacheinander im Reaktor angeordnet sein. Letztere Anordnung ist insbesondere dann vorteilhaft, wenn der eingangsseitig angeordnete Zeolith-Katalysator besonders die NOₓ-Zersetzung, gegebenenfalls in Gegenwart von Stickstoff-enthaltenden Reduktionsmitteln, katalysiert und/oder der ausgangsseitig angeordnete Zeolith-Katalysator besonders die N₂O-Zersetzung katalysiert.

Besonders bevorzugt wird in dem erfindungsgemäßen Verfahren ein einheitlicher oben beschriebener Zeolith-Katalysator eingesetzt.

Die Ausführung der Reaktionszone ist im Sinne der vorliegenden Erfindung im Prinzip frei gestaltbar. Sie kann beispielsweise in einem Röhrenreaktor oder Radialkorbreaktor ausgestaltet sein.

Das mit Stickstoffoxiden beladene Gas wird üblicherweise mit einer Raumgeschwindigkeit von 200 bis 200.000 h⁻¹, vorzugsweise 5.000 bis 50.000 h⁻¹, besonders bevorzugt 10.000 bis 30.000 h⁻¹, bezogen auf das Katalysatorvolumen, über den Katalysator geleitet. Unter dem Begriff Raumgeschwindigkeit ist dabei der Quotient aus Volumenanteilen Gasgemisch bei Normbedingungen pro Stunde bezogen auf einen Volumenanteil Katalysator zu verstehen. Die Raumgeschwindigkeit kann somit über die Strömungsgeschwindigkeit des Gases und/oder über die Katalysatormenge eingestellt werden.

Das erfindungsgemäße Verfahren wird bevorzugt bei einer GSHV (Gas Hourly Spaced Velocity) von 2.000 bis 200.000 NL_{Gas}/L_{Kat}h (NL: Normliter - Gasvolumen bei Normbedingungen), besonders bevorzugt 5.000 bis 50.000 NL_{Gas}/L_{Kat}h, ganz besonders bevorzugt 10.000 bis 30.000 NL_{Gas}/L_{Kat}h, durchgeführt.

Die vorliegende Erfindung betrifft daher insbesondere das erfindungsgemäße Verfahren, wobei die GSHV (Gas Hourly Spaced Velocity) 2.000 bis 200.000 NL_{Gas}/L_{Kat}h (NL: Normliter - Gasvolumen bei Normbedingungen), besonders bevorzugt 5.000 bis 50.000 NL_{Gas}/L_{Kat}h, ganz besonders bevorzugt 10.000 bis 30.000 NL_{Gas}/L_{Kat}h, beträgt.

Das erfindungsgemäße Verfahren wird im Allgemeinen bei einem Druck im Bereich von 1 bis 50 bar (a), vorzugsweise 2 bis 15 bar (a) durchgeführt.

Das erfindungsgemäße Verfahren kann in einer Ausführungsform in Gegenwart wenigstens eines Reduktionsmittels durchgeführt werden. Erfindungsgemäß sind im Allgemeinen alle Reduktionsmittel geeignet, die unter den Bedingungen des Verfahrens in der Lage sind das bevorzugt abzubauende Distickstoffmonoxid N₂O zu reduzieren.

Die vorliegende Erfindung betrifft daher bevorzugt das erfindungsgemäße Verfahren, wobei zusätzlich wenigstens ein Reduktionsmittel verwendet wird.

Bevorzugte Reduktionsmittel sind ausgewählt aus der Gruppe bestehend aus Stickstoffverbindungen, beispielsweise NH₃, Kohlenwasserstoffen, beispielsweise Methan CH₄ oder Propan C₃H₈, CO, SO₂, H₂ und Mischungen davon. Besonders bevorzugte Reduktionsmittel sind ausgewählt aus der Gruppe bestehend aus NH₃, Methan CH₄, Propan C₃H₈, H₂ und Mischungen davon

Die vorliegende Erfindung betrifft daher bevorzugt das erfindungsgemäße Verfahren, wobei das Reduktionsmittel ausgewählt ist aus der Gruppe bestehend aus Stickstoffverbindungen, Kohlenwasserstoffen, CO, SO₂, H₂ und Mischungen davon.

Neben NH₃ sind weitere geeignete Stickstoffverbindungen beispielsweise Azane, Hydroxylderivate von Azanen, sowie Amine, Oxime, Carbamate, Harnstoff oder Harnstoffderivate.

Ein Beispiel für Azane ist Hydrazin.

Beispiele für Hydroxylderivate von Azanen sind Hydroxylamin.

Beispiele für Amine sind primäre aliphatische Amine, wie Methylamin.

Ein Beispiel für Carbamate ist Ammoniumcarbamat.

Beispiele für Harnstoffderivate sind N, N'-substituierte Harnstoffe, wie N, N'-Dimethylharnstoff. Harnstoffe und Harnstoffderivate werden vorzugsweise in Form von wässrigen Lösungen eingesetzt.

Die Art der Einbringung der bevorzugt gasförmig eingesetzten Reduktionsmittel in den zu behandelnden Gasstrom ist im Sinne der Erfindung frei gestaltbar, bevorzugt erfolgt dieses in Stromrichtung vor der Reaktionszone. Sie kann z. B. in der Eintrittsleitung vor dem Behälter vor das Katalysatorbett oder unmittelbar vor dem Bett erfolgen. Die Reduktionsmittel können in Form von Gasen oder auch in Form einer Flüssigkeit, bzw. wässrigen Lösung eingebracht werden, die im zu behandelnden Gasstrom verdampft. Die Einspeisung eines gegebenenfalls zugegebenen Reduktionsmittels in das zu behandelnde Gas erfolgt bevorzugt durch eine geeignete Vorrichtung, wie z. B. einem entsprechenden Druckventil oder entsprechend ausgestalteten Düsen.

Die Menge der gegebenenfalls zugesetzten Reduktionsmittel wird im Allgemeinen so bestimmt, dass, bezogen auf das abzubauende Stickstoffoxid, eine etwa äquimolare Menge an Reduktionsmittel im Reaktor vorliegt.

Der Sauerstoffgehalt des Reaktionsgases liegt vorzugsweise bei weniger als 10 Vol.-%, insbesondere bei weniger als 5 Vol.-%.

Der Wassergehalt des Reaktionsgases liegt vorzugsweise weniger als 10 Vol.-%, insbesondere weniger als 1 Vol.-%.

Im Allgemeinen wird eine relativ niedrige Wasserkonzentration bevorzugt, da höhere Wassergehalte höhere Betriebstemperaturen erforderlich machen würden. Diese könnte je nach eingesetztem Zeolith-Typ und Betriebsdauer die dihydrothermalen Stabilitätsgrenzen des Katalysators überschreiten und ist somit dem jeweils gewählten Einzelfall anzupassen.

Durch das erfindungsgemäße Verfahren kann der Gehalt an Stickstoffoxiden in dem zu behandelnden Gasstrom signifikant erniedrigt werden. Beispielsweise werden 10 Vol.-ppm bis 20 Vol.-%, bevorzugt 200 Vol.-ppm bis 10 Vol.-%, besonders bevorzugt 500 bis 2000 Vol.-ppm, der zu Beginn vorliegenden Stickstoffoxide, insbesondere Distickstoffmonoxid N₂O, durch das erfindungsgemäße Verfahren unter Verwendung des speziellen oben beschriebenen Zeolith-Katalysators abgebaut.

Erfindungsgemäß werden die vorliegenden Stickstoffoxide katalytisch abgebaut, indem sie bevorzugt in Stickstoff N₂ und Sauerstoff O₂, bei Anwesenheit eines Reduktionsmittels zusätzlich in das Oxidationsprodukt dieses Reduktionsmittels, z. B. bei H₂ in H₂O, überführt werden.

Das erfindungsgemäße Verfahren kann besonders bei der Salpetersäureproduktion, bei der Adipinsäureproduktion, bei Kraftwerksabgasen, bei Gasturbinen, oder bei Autokatalysatoren im Niedrigtemperaturbereich zum Einsatz kommen. In diesen Prozessen fallen Stickstoffoxid-haltige Prozess- und Abgase an, die mit Hilfe des hier aufgezeigten Verfahrens kostengünstig entstickt werden können.

### Beispiele

### 1. Katalysatorpräparation

Als Ausgangsmaterialien für die Katalysatorpräparation werden käufliche Zeolithe in der H-Form als Pulver eingesetzt. BEA₁₀ steht für das Verkaufsprodukt PB/H der Firma Zeochem und MFI₁₇ entspricht PZ 2/25H derselben Firma. FAU₄₀ alias CBV 780, FER₁₀ alias CP 914C, BEA₁₄₀ alias CBV 28014 und MFI₁₅ alias CBV 3020E können von der Firma Zeochem käuflich erworben werden. BEA₁₄₀ wird 4 h bei 450 °C mit einer Wasserdampf-Atmosphäre behandelt, bevor Übergangsmetall und Phosphor und/oder Schwefelatome eingebracht werden. Durch diesen Prozess werden die Kristallinität und Azidität des Zeolithen verbessert.

Alle Katalysatoren werden zunächst gemäß Wasseraufnahme des Zeolithen mit Eisennitrat-Lösung getränkt. Die Lösungsmenge wird also so gewählt, dass die Lösung komplett vom Katalysator aufgenommen wird und in diesem gleichmäßig verteilt vorliegt. Die Eisennitrat-Menge wird dabei so gewählt, dass nach Kalzinierung bei 550 °C über 4 Stunden unter Stickstoffatmosphäre im Produkt die angegebene Eisenmenge enthalten wird. Die spezifizierten Phosphor- und Schwefelgehalte werden anschließend über Tränkung (gemäß Wasseraufnahme) mit passend verdünnter Phosphor- bzw. Schwefelsäure und erneuter Kalzinierung unter den oben angegebenen Bedingungen erhalten. Die so erhaltenen Pulver werden anschließend ohne Waschung oder ähnliche Prozessschritte kompaktiert und gesplittet. Bei der anschließenden Testung wird eine durch Sieben erhaltene Fraktion von 0,4 bis 0,7 mm großen Partikeln eingesetzt.

### 2. Testung

Der so erhaltene Katalysator wird in einen Rohrreaktor eingebaut und getestet. Die Katalysatormenge entspricht jeweils 0,5 mL. Die Versuche werden bei 1,5 bar (a) und einer GSHV (Gas Hourly Spaced Velocity) von 8000 NL_{Gas}/L_{Kat}h durchgeführt. Eingangsgas und Ausgangsgas werden per GC-Analytik (Flammenionisationsdetektor) auf den Gehalt an Lachgas hin untersucht, um die Abreicherung bzw. den Umsatz errechnen zu können.

Die Mischung aus 1000 Vol/ppm N₂O, 3 Vol.% O₂, 0,3 Vol.-% H₂O und den auf 100 Vol.-% fehlenden Anteil an N₂ wird im Folgenden als Grundgas bezeichnet. In dieser Mischung wird optional ein Teil des Stickstoffs durch weitere Komponenten wie folgt ersetzt: 1000 Vol.-ppm NOₓ (Gleichgewichtszusammensetzung aus NO und NO₂), 2000 Vol.-ppm H₂, 2000 Vol.-ppm NH₃ und/oder 500 bzw. 2000 Vol.-ppm C₃H₈. Diese optionalen Dosierungen sind in der Versuchstabelle jeweils angezeigt, wobei die Faktoren 0,5, 1 und 2 vor der Beimischung die Dosiermenge in 1000 Vol.-ppm-Inkrementen bezeichnen.

Die Ergebnisse der einzelnen Versuche sind in den Tabellen 1 und 2 angegeben. Es wird der Umsatz an N₂O bei 300 bzw. 400 °C im Grundgas angegeben. Bei der Beschreibung der eingesetzten Katalysatoren bedeuten die tief gestellten Zahlen die Menge des vorliegenden Übergangsmetalls bzw. S und/oder P in Gewichtsprozenten, wobei die Menge an Zeolith nicht angegeben ist, da die Summe aus Zeolith, Übergangsmetall, S und/oder P jeweils 100 Gew.-% ergibt. Beispielsweise liegen in dem Katalysator Fe_{2.5}P_{0.4}-BEA₁₄₀ 2,5 Gew.-% Fe, 0,4 Gew.-% P und Rest zu 100 Gew.-%, d. h. 97,1 Gew.%, Zeolith BEA₁₄₀, vor. "-" bedeutet "nicht bestimmt".

Die in den Tabellen 1 und 2 mit "V" gekennzeichneten Katalysatoren stellen Vergleichsbeispiele dar.

**Tabelle 1: Umsatz an N₂O bei 300 °C im Grundgas**

| **Nr.** | **Katalysator** | **rein** | **+NOₓ** | **+NOₓ +2·H₂** | **+NOₓ +2·C₂H₆** | **+2·H₂** | **+2·C₂H₆** | **+0,5·C₂H₆** | **+2·NH₃** | **+2·H₂ kein O₂** |
|---|---|---|---|---|---|---|---|---|---|---|
| **V1** | Fe_{2.5}-BEA₁₀ | - | 0% | - | 12% | - | 100% | 84% | 53% | 67% |
| **2** | Fe_{2.5}P_{0.4}-BEA₁₀ | - | 12% | | 27% | 34% | 100% | 100% | 60% | 100% |
| **V3** | Fe_{2.5}-BEA₁₄₀ | - | - | - | - | - | - | - | - | 96% |
| **4** | Fe_{2.5}P_{0.4}-BEA₁₄₀ | - | - | - | - | - | - | - | - | 100% |
| **V5** | Cu_{2.5}-FAU₄₀ | - | - | - | - | - | - | - | - | 10% |
| **6** | Cu_{2.5}P_{2.2}-FAU₄₀ | - | - | - | - | - | - | - | - | 17% |
| **V7** | Fe_{2.5}-FER₁₀ | 0% | 5% | 7% | 10% | 7% | 9% | - | 14% | 89% |
| **8** | Fe_{2.5}S_{2.1}-FER₁₀ | 2% | - | 7% | 11% | 18% | 12% | - | 17% | 100% |
| **9** | Fe_{2.5}P_{0.4}-FER₁₀ | 0% | 6% | 7% | 12% | 24% | 14% | - | 32% | 100% |
| **10** | Fe_{2.5}P_{0.7}-FER₁₀ | 5% | 5% | 8% | 12% | 19% | 19% | - | 30% | 100% |
| **11** | Fe_{2.5}P_{1.4}-FER₁₀ | 0% | 4% | 1% | 6% | 14% | 31% | - | 16% | 78% |
| **12** | Fe_{2.5}P_{2.2}-FER₁₀ | - | - | - | - | - | - | - | - | 65% |
| **13** | Fe_{2.5}P_{2.9}-FER₁₀ | 0% | 3% | 0% | 5% | 8% | 18% | - | 12% | 27% |
| **14** | Fe_{2.5}P_{3.6}-FER₁₀ | - | - | - | - | - | - | - | - | 17% |
| **V15** | Fe_{2.5}-MFI₁₇ | 0% | 0% | 0% | 12% | 0% | 91% | - | 14% | n. b. |
| **16** | Fe_{2.5}P_{0.4}-MFI₁₇ | 1% | 2% | 0% | 16% | 8% | 90% | - | 28% | n. b. |
| **17** | Fe_{2.5}P_{0.7}-MFI₁₇ | 2% | 4% | 13% | 15% | 8% | 81% | - | 27% | n. b. |
| **18** | Fe_{2.5}P_{1.1}-MFI₁₇ | 0% | 3% | 0% | 15% | 19% | 88% | - | 26% | n. b. |
| **19** | Fe_{2.5}P_{1.4}-MFI₁₇ | 0% | 4% | 0% | 14% | 7% | 92% | - | 26% | n. b. |

**Tabelle 2: Umsatz an N₂O bei 400 °C im Grundgas**

| **Nr.** | **Katalysator** | **rein** | **+NOₓ** | **+NOₓ +2·H₂** | **+NOₓ +2·C₂H₆** | **+2·H₂** | **+2·C₂H₆** | **+2·NH₃** | **+2.H₂ kein O₂** |
|---|---|---|---|---|---|---|---|---|---|
| **V20** | Fe_{2.5}-BEA₁₀ | - | 78% | - | - | 35% | 100% | - | 100% |
| **21** | Fe_{2.5}P_{0.4}-BEA₁₀ | - | 82% | - | - | 48% | 100% | 69% | 100% |
| **V22** | Cu_{2.5}-BEA₁₀ | - | - | - | - | 12% | - | - | - |
| **23** | CU_{2.5}P_{0.2}-BEA₁₀ | - | - | - | - | 14% | - | - | - |
| **24** | Cu_{2.5}P_{0.4}-BEA₁₀ | - | - | - | - | 16% | - | - | - |
| **25** | Cu_{2.5}P_{0.8}-BEA₁₀ | - | - | - | - | 12% | - | - | - |
| **26** | Cu_{2.5}P_{1.2}-BEA₁₀ | - | - | - | - | 13% | - | - | - |
| **27** | Cu_{2.5}P_{1.6}-BEA₁₀ | - | - | - | - | 12% | - | - | - |
| **V28** | Fe_{2.5}-FAU₄₀ | - | - | - | - | - | - | - | 77% |
| **29** | Fe_{2.5}P_{2.2}-FAU₄₀ | - | - | - | - | - | - | - | 100% |
| **V30** | Fe_{2.5}-FER₁₀ | 2% | 34% | 49% | 62% | 23% | 85% | 22% | 100% |
| **31** | Fe_{2.5}P_{0.4}-FER₁₀ | 2% | 73% | 78% | 89% | 39% | 100% | 34% | 100% |
| **32** | Fe_{2.5}P_{0.7}-FER₁₀ | 9% | 74% | 79% | 80% | 53% | 100% | 55% | 100% |
| **33** | Fe_{2.5}P_{1.4}-FER₁₀ | 2% | 49% | 62% | 50% | 42% | 95% | 24% | 100% |
| **34** | Fe_{2.5}P_{2.2}-FER₁₀ | - | 44% | 59% | - | - | - | - | 100% |
| **35** | Fe_{2.5}P_{2.9}-FER₁₀ | 1% | 28% | 37% | 40% | 38% | 81% | 20% | 76% |
| **36** | Fe_{2.5}P_{3.6}-FER₁₀ | - | 23% | 38% | - | - | - | - | 73% |
| **V37** | Fe_{2.5}-MFI₁₅ | - | - | - | - | - | - | - | 69% |
| **38** | Fe_{2.5}P_{2.2}-MFI₁₅ | - | - | - | - | - | - | - | 74% |
| **V39** | Fe_{2.5}-MFI₁₇ | 1% | 25% | 32% | 68% | 20% | 100% | 50% | - |
| **40** | Fe_{2.5}P_{0.4}-MFI₁₇ | 1% | 34% | 44% | 64% | 29% | 100% | 54% | - |
| **41** | Fe_{2.5}P_{0.7}-MFI₁₇ | 1% | 34% | 29% | 63% | 26% | 100% | 37% | - |
| **42** | Fe_{2.5}P_{1.1}-MFI₁₇ | 2% | 29% | 35% | 74% | 28% | 100% | 47% | - |
| **43** | Fe_{2.5}P_{1.4}-MFI₁₇ | 2% | 33% | 40% | 69% | 19% | 100% | 49% | - |
| **V44** | Cu_{2.5}-MFI₁₇ | - | - | 0% | - | 9% | - | - | - |
| **45** | Cu_{2.5}P_{0.2}-MFI₁₇ | - | - | 8% | - | 14% | - | - | - |
| **46** | Cu_{2.5}P_{0.4}-MFI₁₇ | - | - | 8% | - | 16% | - | - | - |
| **47** | Cu_{2.5}P_{0.8}-MFI₁₇ | - | - | 8% | - | 20% | - | - | - |
| **48** | Cu_{2.5}P_{1.2}-MFI₁₇ | - | - | 9% | - | 18% | - | - | - |
| **49** | Cu_{2.5}P_{1.4}-MFI₁₇ | - | - | 9% | - | - | - | - | - |
| **50** | Cu_{2.5}P_{2.2}-MFI₁₇ | - | - | 9% | - | - | - | - | - |
| **51** | Cu_{2.5}P_{4.1}-MFI₁₇ | - | - | 8% | - | - | - | - | - |

## Patentansprüche

1. Verwendung eines Zeolith-Katalysator zur Minderung des Gehaltes an Stickstoffoxiden in einem Gas, **dadurch gekennzeichnet, dass** der Zeolith-Katalysator wenigstens ein Übergangsmetall ausgewählt aus der Gruppe bestehend aus Sc, Ti, V, Cr, Mn, Fe, Co, Ni, Zn, Ru, Rh, Pd, Ag, Os, Ir, Pt, Au und Mischungen davon, und zusätzlich Schwefel- und/oder Phosphoratome enthält, wobei die Schwefel- und/oder Phosphoratome in einer Konzentration von weniger als 3 Gew.-%, bezogen auf den gesamten Katalysator, vorliegen und der Zeolith ausgewählt ist aus der Gruppe bestehend aus BEA, FAU, FER, MFI und Mischungen davon.

2. Verwendung nach Anspruch 1, **dadurch gekennzeichnet, dass** das wenigstens eine Übergangsmetall in einer Konzentration von 0,1 bis 10,0 Gew.-%, bezogen auf den gesamten Katalysator, vorliegt.

3. Verwendung nach Anspruch 1 oder 2, **dadurch gekennzeichnet, dass** das wenigstens eine Übergangsmetall Fe, Co und/oder Ni ist.

4. Verwendung nach einem der Ansprüche 1 bis 3 in der Salpetersäureproduktion, bei der Adipinsäureproduktion, bei Kraftwerksabgasen, bei Gasturbinen, oder bei Autokatalysatoren im Niedrigtemperaturbereich.

5. Verfahren zur Minderung des Gehaltes an Stickstoffoxiden in einem Gas durch Inkontaktbringen des Gases mit einem Zeolith-Katalysator wie in einem der Ansprüche 1 bis 4 definiert.

6. Verfahren nach Anspruch 5, **dadurch gekennzeichnet, dass** zusätzlich wenigstens ein Reduktionsmittel verwendet wird.

7. Verfahren nach Anspruch 5 oder 6, **dadurch gekennzeichnet, dass** es bei einer Temperatur von weniger als 400 °C durchgeführt wird.

8. Verfahren nach einem der Ansprüche 5 bis 7, **dadurch gekennzeichnet, dass** die GHSV 200 bis 200.000 NL_{Gas}/L_{Kat}·h, bevorzugt 5.000 bis 50.000 NL_{Gas}/L_{Kat}·h, besonders bevorzugt 10.000 bis 30.000 NL_{Gas}/L_{Kat}·h, beträgt.

9. Verfahren nach einem der Ansprüche 6 bis 8, **dadurch gekennzeichnet, dass** das Reduktionsmittel ausgewählt ist aus der Gruppe bestehend aus Stickstoffverbindungen, Kohlenwasserstoffen, CO, SO₂, H₂ und Mischungen davon.

## Claims

1. The use of a zeolite catalyst for reducing the content of nitrogen oxides in a gas, wherein the zeolite catalyst comprises at least one transition metal selected from the group consisting of Sc, Ti, V, Cr, Mn, Fe, Co, Ni, Zn, Ru, Rh, Pd, Ag, Os, Ir, Pt, Au and mixtures thereof, and in addition sulfur and/or phosphorus atoms, wherein the sulfur and/or phosphorus atoms are present in a concentration of less than 3% by weight, based on the total catalyst, and the zeolite is selected from the group consisting of BEA, FAU, FER, MFI and mixtures thereof.

2. The use according to claim 1, wherein the at least one transition metal is present in a concentration of from 0.1 to 10.0% by weight, based on the total catalyst.

3. The use according to claim 1 or 2, wherein the at least one transition metal is Fe, Co and/or Ni.

4. The use according to any of claims 1 to 3 in nitric acid production, in adipic acid production, for power station offgases, for gas turbines or for automobile catalysts in the low-temperature range.

5. A process for reducing the content of nitrogen oxides in a gas by bringing the gas into contact with a zeolite catalyst as defined in any of claims 1 to 4.

6. The process according to claim 5, wherein at least one reducing agent is additionally used.

7. The process according to claim 5 or 6 carried out at a temperature of less than 400°C.

8. The process according to any of claims 5 to 7, wherein the GHSV is from 200 to 200 000 standard l_{gas}/l_{cat}·h, preferably from 5000 to 50 000 standard l_{gas}/l_{cat}·h, particularly preferably from 10 000 to 30 000 standard l_{gas}/l_{cat}·h.

9. The process according to any of claims 6 to 8, wherein the reducing agent is selected from the group consisting of nitrogen compounds, hydrocarbons, CO, SO₂, H₂ and mixtures thereof.

## Revendications

1. Utilisation d'un catalyseur zéolitique pour réduire la teneur en oxydes d'azote dans un gaz, **caractérisée en ce que** le catalyseur zéolitique contient au moins un métal de transition choisi parmi le groupe constitué de Sc, Ti, V, Cr, Mn, Fe, Co, Ni, Zn, Ru, Rh, Pd, Ag, Os, Ir, Pt, Au et de mélanges de ceux-ci, ainsi que des atomes de soufre et/ou de phosphore, les atomes de soufre et/ou de phosphore étant présents dans une concentration inférieure à 3 % en poids, par rapport au catalyseur total, et la zéolithe étant choisie parmi le groupe constitué de BEA, FAU, FER, MFI et des mélanges de ceux-ci.

2. Utilisation selon la revendication 1, **caractérisée en ce que** l'au moins un métal de transition est présent dans une concentration de 0,1 à 10,0 % en poids, par rapport au catalyseur total.

3. Utilisation selon la revendication 1 ou 2, **caractérisée en ce que** l'au moins un métal de transition est Fe, Co et/ou Ni.

4. Utilisation selon l'une quelconque des revendications 1 à 3 dans la production d'acide nitrique, pour la production d'acide adipique, dans les gaz d'échappement de centrales, dans les turbines à gaz, ou dans les catalyseurs pour automobiles à basses plages de températures.

5. Procédé pour réduire la teneur en oxydes d'azote dans un gaz par mise en contact du gaz avec un catalyseur zéolitique selon l'une quelconque des revendications 1 à 4.

6. Procédé selon la revendication 5, **caractérisé en ce que** l'on utilise en outre au moins un agent réducteur.

7. Procédé selon la revendication 5 ou 6, **caractérisé en ce qu'**il est mis en oeuvre à une température inférieure à 400°C

8. Procédé selon l'une quelconque des revendications 5 à 7, **caractérisé en ce que** la vitesse spatiale horaire gazeuse (GHSV) vaut 200 à 200.000 NL_{Gas}/L_{Kat}.h, de préférence 5000 à 50.000 NL_{Gas}/L_{Kat}.h, particulièrement préférablement 10.000 à 30.000 NL_{Gas}/L_{Kat}.h.

9. Procédé selon l'une quelconque des revendications 6 à 8, **caractérisé en ce que** l'agent réducteur est choisi parmi le groupe constitué de composés d'azote, d'hydrocarbures, de CO, de SO₂, de H₂ et de mélanges de ceux-ci.
